(19) Europäisches Patentamt
European Patent Office
Office européen des brevets

(11) EP 2 697 859 B1

(12) FASCICULE DE BREVET EUROPEEN

(45) Date de publication et mention
de la délivrance du brevet:
**04.03.2015 Bulletin 2015/10**

(21) Numéro de dépôt: **12716338.4**

(22) Date de dépôt: **13.04.2012**

(51) Int Cl.:
*H01M 10/44* *(2006.01)*     *H01M 10/46* *(2006.01)*

(86) Numéro de dépôt international:
**PCT/EP2012/056735**

(87) Numéro de publication internationale:
**WO 2012/140176 (18.10.2012 Gazette 2012/42)**

(54) **PROCEDE DE CHARGE OPTIMAL D'UN ACCUMULATEUR ELECTROCHIMIQUE**

VERFAHREN ZUM OPTIMALEN AUFLADEN EINER BATTERIEZELLE

METHOD FOR OPTIMALLY CHARGING AN ELECTROCHEMICAL BATTERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.04.2011 FR 1153293**

(43) Date de publication de la demande:
**19.02.2014 Bulletin 2014/08**

(73) Titulaire: **Commissariat à l'Énergie Atomique
et aux Énergies Alternatives
75015 Paris (FR)**

(72) Inventeur: **MAMADOU, Kelli
F-97200 Fort De France (FR)**

(74) Mandataire: **Novaimo
Bâtiment Europa 2
310 avenue Marie Curie
Archamps Technopole
74166 Saint Julien en Genevois Cedex (FR)**

(56) Documents cités:
**FR-A1- 2 803 105     US-A1- 2009 295 338
US-B1- 7 528 574**

EP 2 697 859 B1

**Description**

L'invention concerne un procédé de charge d'un accumulateur électrochimique. Elle concerne aussi tout dispositif ou système intégrant un accumulateur électrochimique dont la gestion est basée sur un tel procédé de charge.

Pour maîtriser le fonctionnement de tout appareil ou système intégrant au moins un accumulateur électrochimique, il est essentiel de connaître et maîtriser les performances de cet accumulateur, pour notamment gérer ses phases de charge et décharge et au final optimiser le fonctionnement de l'appareil ou du système.

Pour cela, le constructeur d'un accumulateur préconise en général un régime de charge lent dans des conditions dites nominales, qui permet de charger l'accumulateur au maximum et sans le détériorer. Ce régime de charge est plus précisément défini par les conditions électriques, c'est-à-dire les valeurs de courant et de tension, qui sont appliquées aux bornes d'un accumulateur pendant une certaine durée pour le charger. Ces conditions électriques sont définies par un algorithme qui dépend de la technologie électrochimique considérée.

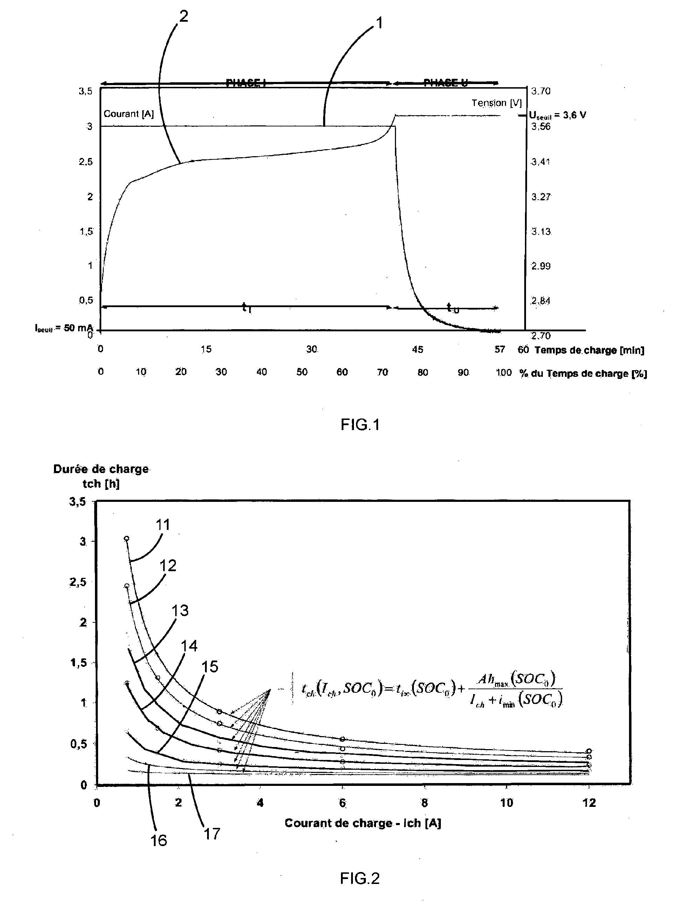

A titre d'exemple, la figure 1 représente les conditions électriques préconisées pour charger un accumulateur basé sur une technologie lithium ion de type $LiFePO_4$. Les courbes 1, 2 représentent respectivement l'évolution du courant et de la tension de charge en fonction du temps. L'algorithme de charge ainsi illustré, appelé algorithme IU, comprend une phase I durant laquelle le courant de charge est constant alors que la tension augmente, et une phase U, qui débute à partir d'une certaine valeur seuil $U_{seuil}$ de la tension, et durant laquelle la tension est maintenue constante à cette valeur de seuil $U_{seuil}$. Durant cette dernière phase U, le courant tend vers une valeur nulle. En-dessous d'une certaine valeur $I_{seuil}$, fixée par le constructeur, la charge de l'accumulateur est considérée complète. La durée totale de charge est donc la somme de la durée $t_I$ de la phase I et de la durée $t_U$ de la phase U. Dans la pratique, c'est surtout la valeur du courant de charge de la phase I qui détermine la durée globale de charge.

Ce régime de charge, tel que défini par un constructeur d'accumulateurs électrochimiques, est souvent considéré trop lent pour un grand nombre d'applications. Pour pallier à cet inconvénient, il est alors connu de mettre en oeuvre des charges plus rapides, à un régime plus élevé. Ces solutions plus rapides présentent alors l'inconvénient d'un rendement de charge réduit, voire d'induire un vieillissement prématuré de l'accumulateur.

Le document US7528574 décrit un procédé de détermination des conditions de charge d'un accumulateur électrochimique. Cette solution reste toutefois insuffisante.

Ainsi, il existe un besoin de définir une solution optimale de charge d'un accumulateur électrochimique, qui permette d'atteindre un bon compromis entre le temps de charge et le rendement de charge.

A cet effet, l'invention repose sur un procédé de charge d'un accumulateur électrochimique, caractérisé en ce qu'il comprend les étapes suivantes :

- réaliser une phase de calibration de l'accumulateur électrochimique, permettant de connaître son temps de charge en fonction de différents régimes de charge pour différentes valeurs d'état initial de l'accumulateur électrochimique ;
- définir deux grandeurs appelées gain en temps et gain en énergie et représentant respectivement une sensibilité au temps de charge d'un accumulateur et une sensibilité au rendement énergétique ; et
- calculer (E11), pour un état initial de l'accumulateur électrochimique, un régime de charge de l'accumulateur électrochimique qui maximise le produit du gain en temps et du gain en énergie définis préalablement.

Ainsi, le procédé détermine le régime de charge de l'accumulateur électrochimique en optimisant le produit d'un gain en temps de charge par un gain en énergie en fonction de l'état initial de l'accumulateur électrochimique.

L'étape de détermination de l'état initial de l'accumulateur électrochimique peut comprendre le calcul de son état de charge initial ($SOC_0$) ou de son état d'énergie initial ($SOE_0$).

L'étape de détermination du régime de charge de l'accumulateur électrochimique peut comprendre la maximisation du produit $G_t(I_{ch}) \times G_{wh}(I_{ch})$ où
$G_t(I_{ch})$ est le gain en temps de charge, qui se calcule comme le rapport entre le temps de charge gagné pour un régime de charge considéré ($I_{ch}$) par rapport à un temps de charge lent de référence, sur le temps de charge de ce régime lent, et où
$G_{wh}(I_{ch})$ est le gain énergétique, qui se définit comme le rapport entre la diminution d'énergie injectée dans l'accumulateur au régime de charge considéré ($I_{ch}$) par rapport à l'énergie injectée à un régime lent de référence, sur l'énergie injectée dans l'accumulateur au régime lent.

Le procédé de charge d'un accumulateur électrochimique peut de plus comprendre une étape de charge de l'accumulateur électrochimique comprenant une période de charge à courant constant (Ich) dont la valeur est déterminée pour maximiser le produit d'un gain en temps de charge par un gain en énergie.

L'étape de charge peut comprendre une période de charge à courant constant jusqu'à une valeur seuil de la tension puis une période de charge à tension constante à cette valeur seuil.

Le procédé de charge peut comprendre une phase de calibration de l'accumulateur électrochimique, permettant de mémoriser son temps de charge en fonction de différents régimes de charge pour différentes valeurs d'état initial et l'étape de détermination du régime de charge de l'accumulateur électrochimique peut comprendre un calcul à partir des données mémorisées lors de la phase de calibration.

La phase de calibration de l'accumulateur électrochimique peut comprendre la réalisation de n x m phases de charges pour n régimes de charge différents et m états de charge initiaux de l'accumulateur électrochimique, et n peut être compris entre 5 et 10 inclus et/ou m peut être compris entre 4 et 8 inclus. La première phase de calibration de l'accumulateur électrochimique peut comprendre l'itération des étapes E1 à E4 suivantes pour chacune des n régimes de charge ($I_{chi}$), soit pour i variant de 1 à n, et des m états de charge initiaux ($SOC_{0j}$), soit pour j variant de 1 à m :

E1 : chargement à pleine charge de l'accumulateur dans les conditions nominales ;
E2 : décharge de l'accumulateur dans des conditions nominales, jusqu'à un état de charge de l'accumulateur électrochimique à la valeur $SOC_{0j}$ recherchée ;
E3 : pleine charge de l'accumulateur à un régime de charge ($I_{chi}$);
E4: décharge complète de l'accumulateur dans des conditions nom inales.

L'étape de pleine charge E3 de l'accumulateur à un régime de charge ($I_{chi}$) peut comprendre les sous-étapes suivantes :

E33 : mesure et mémorisation du temps total de charge ($t_{chij}$) obtenu ;
E34 : mesure et mémorisation de la quantité totale ($A_{chij}$) d'ampères-heure injectés pour cette charge et/ou de l'énergie ($W_{hij}$) injectée dans l'accumulateur.

La phase de calibration de l'accumulateur électrochimique peut aussi comprendre une itération de plusieurs phases de charge pour des températures différentes.

L'invention porte aussi sur un dispositif de charge d'un accumulateur électrochimique, caractérisé en ce qu'il met en oeuvre un procédé de charge tel que décrit précédemment.

L'invention porte aussi sur un système comprenant un dispositif alimenté par un accumulateur électrochimique, caractérisé en ce qu'il comprend un dispositif de charge de cet accumulateur tel que décrit ci-dessus.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente l'évolution du courant et de la tension de charge en fonction du temps selon un algorithme de charge IU d'un accumulateur électrochimique de l'état de la technique.

La figure 2 illustre quelques courbes représentant la durée de charge d'un accumulateur en fonction du régime de charge, pour différents états de charges initiaux, selon le mode de réalisation de l'invention.

La figure 3 représente le gain de temps en fonction du gain en énergie, pour différentes valeurs d'état de charge initiale $SOC_0$ selon le mode de réalisation de l'invention.

La figure 4 représente le produit du gain de temps en fonction du gain en énergie en fonction du gain en énergie, pour différentes valeurs d'état de charge initiale $SOC_0$ selon le mode de réalisation de l'invention.

La figure 5 représente un algorithme du procédé de charge selon le mode de réalisation de l'invention.

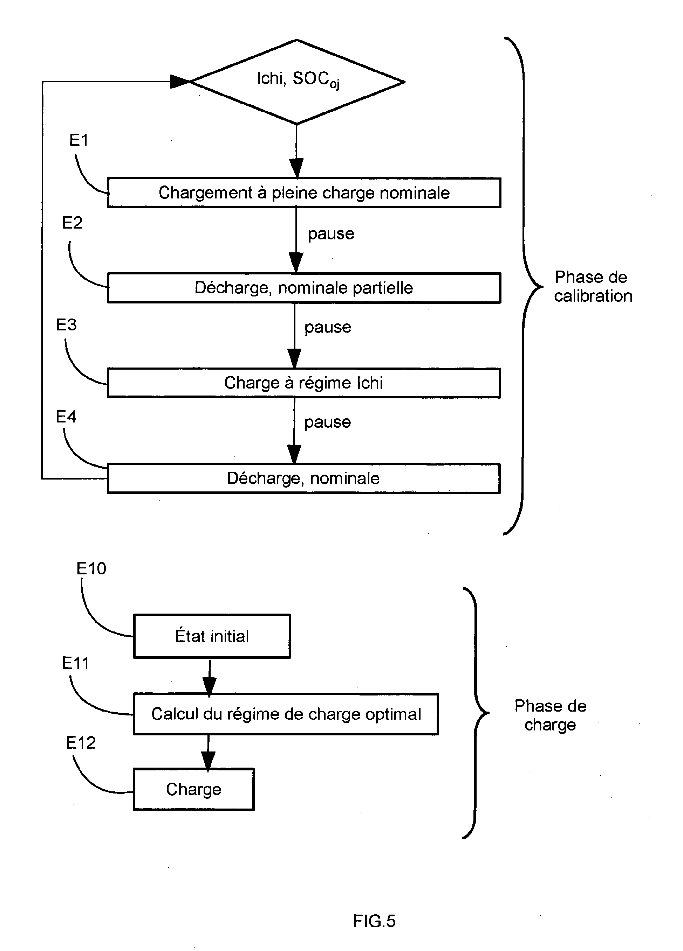

Selon le mode de réalisation, l'invention repose sur un procédé de charge d'un accumulateur électrochimique, dont l'algorithme est illustré sur la figure 5, qui comprend une première phase de calibration de cet accumulateur électrochimique ou d'un accumulateur représentatif de la technologie électrochimique utilisée.

Cette première phase de calibration consiste à déterminer le temps de charge nécessaire pour la charge complète d'un accumulateur et l'efficacité de ladite charge, à partir de plusieurs états initiaux de l'accumulateur et à partir de plusieurs régimes de charge. Cette calibration permet ainsi de définir un tableau de valeurs ou abaque, qui servira de référence à l'optimisation de la charge d'un accumulateur, qui sera explicitée par la suite.

Selon le mode de réalisation, la calibration est obtenue pour plusieurs régimes de charge d'un accumulateur, c'est-à-dire pour plusieurs conditions électriques I, U. Pour cela, il est par exemple possible de définir plusieurs valeurs de courants de charge $I_{ch}$ dans le cas d'utilisation d'un algorithme IU tel que présenté en référence avec la figure 1. En remarque, ce même principe reste valable pour tout algorithme de charge d'un accumulateur électrochimique, quel que soit l'algorithme électrique utilisé. Pour simplifier, nous considérerons l'algorithme IU par la suite.

Ces différentes valeurs de régimes de charge incluent le régime nominal, c'est-à-dire la valeur préconisée par le constructeur, et la performance de la charge est réellement testée pour chacun de ces régimes de charge. Un nombre n de valeurs différentes de courants de charge compris entre 5 et 10 représente un bon compromis. Ces n valeurs peuvent être choisies, uniformément ou non réparties, sur une plage d'utilisation de l'accumulateur, et/ou pour de forts ou faibles régimes.

Ensuite, la calibration est aussi effectuée pour différents états de charge initiaux $SOC_0$ de l'accumulateur. En remarque, l'état de charge de l'accumulateur, appelé par sa dénomination anglo-saxonne « State Of Charge », et couramment plus simplement SOC, représente la capacité disponible de l'accumulateur sur une échelle de 0 à 1, les valeurs de 0 et 1 représentant respectivement les états totalement déchargé et chargé de l'accumulateur. Cette calibration est effectuée sur m valeurs d'état de charge, m étant avantageusement compris entre 4 et 8.

En remarque, l'état d'énergie, dénommé « State Of Energy » SOE, défini comme le rapport entre l'énergie $E_{d/PN}$ disponible dans l'hypothèse d'une décharge d'énergie dans les conditions nominales de l'accumulateur et l'énergie nominale EN, donc défini par la formule $SOE = E_{d/PN} / E_N$, peut être substitué au paramètre SOC mentionné ci-dessus. Cette valeur de SOE est de même comprise entre 0 et 1, la valeur égale à 1 correspondant à un état d'énergie de l'accumulateur totalement chargé et la valeur égale à 0 comme un état totalement déchargé.

La phase de calibration repose donc sur la réalisation de n x m phases de charge d'un accumulateur électrochimique en faisant varier le régime et l'état de charge initial de l'accumulateur, tel que décrit ci-dessus. Ces n x m conditions de charge sont choisies de sorte de ne pas entraîner de dégradation ou vieillissement anormal de l'accumulateur. Elles restent dans des plages de valeurs considérées comme acceptables par l'accumulateur. Pour ces différents cycles de charge, la température ambiante reste constante, de préférence comprise entre 20 et 25 °C. Pour un accumulateur électrochimique aqueux, l'appoint en eau est régulièrement fait pour conserver sa performance durant toute la phase de calibration.

Selon le mode d'exécution de l'invention, cette phase de calibration comprend finalement les étapes suivantes, répétées successivement pour chacune des n valeurs de $I_{chi}$ (soit pour i variant de 1 à n) et des m valeurs $SOC_{0j}$ (soit pour j variant de 1 à m) :

E1 : chargement à pleine charge de l'accumulateur dans les conditions nominales, soit pour un régime de charge comprenant une phase à courant constant Ichn, à la valeur nominale, puis une phase à tension constante Useuil, tel que représenté sur figure 1 ;

E2 : décharge dans des conditions nominales, soit pour un courant de décharge $I_{dch}$ égal à la valeur nominale $I_{dchn}$. En remarque, cette dernière est définie dans une plage de décharge recommandée par le constructeur, et de la manière la plus reproductible possible pour obtenir une calibration la plus fiable possible. Par exemple, le régime de décharge permettant d'atteindre la décharge complète en 1 H est acceptable pour la technologie Lithium-ion. Cette décharge est poursuivie jusqu'à ce que la quantité d'ampères/heure restitués (Ah) soit égale à $(1-SOC_{0j})$ x $C_n$, où $C_n$ représente la capacité nominale de l'accumulateur, soit le nombre total d'Ah restitués lors d'une décharge totale dans les conditions nominales. Une telle décharge permet de positionner l'accumulateur électrochimique dans un état de charge à la valeur $SOC_{0j}$ recherchée ;

E3 : pleine charge de l'accumulateur à un régime i, défini par un courant de charge $I_{ch} = I_{chi}$. Cette étape comprend les sous-étapes suivantes :

E31 : charge en phase I à courant constant $I_{chi}$ jusqu'à la valeur seuil $U_{seuil}$ de la tension ;

E32 : charge en phase U à tension constante à la valeur $U_{seuil}$ jusqu'à ce que le courant passe sous sa valeur seuil $I_{seuil}$ ;

En remarque, ces deux sous-étapes E31 et E32 seront adaptées à tout autre algorithme de charge selon la technologie d'accumulateur calibrée. Ensuite, en parallèle des deux étapes E31 et E32, les sous-étapes suivantes sont réalisées:

E33 : mesure et mémorisation du temps total de charge $t_{chij}$ obtenu à partir des conditions de régime $I_{chi}$ et d'état de charge initial $SOC_{0j}$ ;
E34 : mesure et mémorisation de la quantité totale $A_{chij}$ d'ampères-heure injectés pour cette charge et/ou de l'énergie $W_{hij}$ injectée dans l'accumulateur, à partir des conditions de régime $I_{chi}$ et d'état de charge initial $SOC_{0j}$.
E4 : nouvelle décharge totale dans les conditions nominales de la batterie.

Une pause est effectuée entre ces différentes étapes E1-E4, d'une durée de relaxation suffisante, par exemple entre 10 et 60 minutes.

Selon une variante de réalisation, la calibration est aussi effectuée en faisant varier la température. Pour cela, p valeurs de température sont choisies, dans une plage allant par exemple de 0 à 40 °C. Les étapes E1 à E4 précédentes sont ensuite ré-itérées pour les n x m x p valeurs considérées, dans un tableau à trois entrées au lieu de deux.

Lorsque cette calibration est faite, il est possible de déduire des lois entre toutes les valeurs utilisées, notamment entre la durée de charge, l'état de charge initial et le régime de charge de l'accumulateur électrochimique. Il est tout simplement possible d'extrapoler les valeurs non directement mesurées par les étapes d'itération explicitées précédemment à partir des mesures réelles effectuées. La phase de calibration peut comprendre ainsi une dernière étape E5 de détermination de toutes les valeurs à partir des n x m (ou n x m x p) mesures réelles obtenues. Les résultats de cette phase de calibration sont mémorisés pour être exploités.

La figure 2 illustre à titre d'exemple quelques courbes représentant la durée de charge d'un accumulateur en fonction du régime de charge, pour différents états de charges initiaux. Plus précisément, les courbes 11, 12, 13, 14, 15, 16, 17 correspondent respectivement à un état de charge initial de 0 %, 20%, 40%, 60%, 80%, 90% et 95%.

En variante, la calibration décrite ci-dessus peut être remplacée par un calcul théorique, sur la base par exemple d'une modélisation physique de l'accumulateur, ou par tout autre procédé permettant de fournir en sortie les valeurs du tableau mentionné précédemment.

Ensuite, le procédé de charge d'un accumulateur électrochimique comprend une seconde phase de charge, comprenant la détermination des conditions de charge d'un certain accumulateur, qui repose sur la recherche d'un compromis optimal entre la réduction du temps de charge et son rendement ou augmentation de l'énergie de charge injectée.

Selon le mode de réalisation, les deux grandeurs suivantes sont considérées pour mesurer les deux critères énoncés ci-dessus :

$G_t(I_{ch})$ : il s'agit d'un gain de temps, qui se calcule comme le rapport entre le temps de charge $t_{ch}$ gagné pour un régime de charge $I_{ch}$ par rapport à un temps de charge lent (régime lent $I_l$), sur le temps de charge de ce régime lent.

Ce gain se définit donc par la formule suivante :

$$G_t(I_{ch}) = (t_{ch}(I_{ch}) - t_{ch}(I_l)) / t_{ch}(I_l)$$

$G_{wh}(I_{ch})$ : il s'agit du gain énergétique, qui se définit comme le rapport entre la diminution d'énergie injectée dans l'accumulateur au régime de charge rapide $I_{ch}$ par rapport à celle injectée à un régime lent $I_l$ de référence, sur l'énergie injectée dans l'accumulateur au régime lent.

Ce gain se définit donc par la formule suivante :

$$G_{wh}(I_{ch}) = (W_h(I_{ch}) - W_h(I_l)) / W_h(I_l)$$

En remarque, les gains précédents ont été utilisés à titre d'exemple mais il existe d'autres possibilités de définir des grandeurs permettant de représenter de manière équivalente le gain en temps et le gain en énergie. Nous entendrons donc par ces termes de gains toutes grandeurs au sens large qui représentent respectivement une sensibilité au temps de charge d'un accumulateur électrochimique et une sensibilité au rendement énergétique de la charge d'un accumulateur électrochimique.

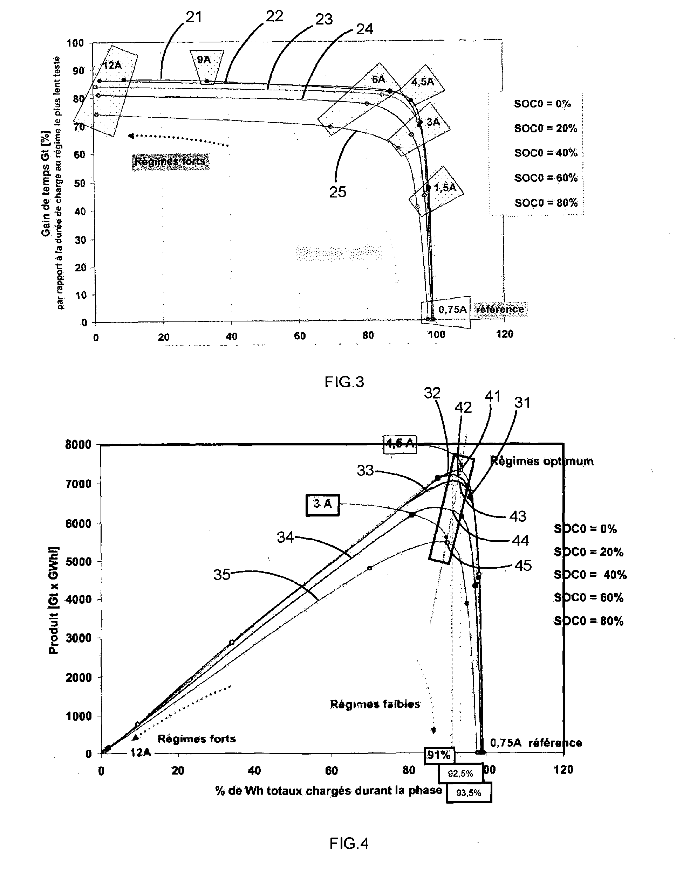

La figure 3 représente le gain de temps en fonction du gain en énergie, pour différentes valeurs d'état de charge initiale $SOC_0$. Plus précisément, les courbes 21, 22, 23, 24, 25 représentent respectivement ces courbes pour des valeurs de 0%, 20 %, 40%, 60%, et 80% d'état de charge initiale. Elles montrent bien que pour un gain de temps nul, le rendement énergétique est maximal, et que lorsque le gain de temps augmente, le rendement énergétique diminue, jusqu'à tendre vers 0 pour un gain de temps entre 75 et 90 %. En remarque, le tracer de ces courbes est rendu possible grâce aux données de calibration obtenues en première phase, comme explicité précédemment.

Selon le mode de réalisation, le compromis optimal des conditions de charge de l'accumulateur électrochimique est défini en considérant le produit $G_t(I_{ch}) \times G_{wh}(I_{ch})$ entre les deux gains définis ci-dessus et en maximisant ce produit. Ainsi, le procédé comprend une étape de recherche du régime de charge (ici le courant de charge $I_{ch}$) qui permet de maximiser ce produit.

La figure 4 représente ce produit en fonction du gain en énergie, pour différentes valeurs d'état de charge initiale $SOC_0$. Plus précisément, les courbes 31, 32, 33, 34, 35 représentent respectivement ces courbes pour des valeurs de 0%, 20 %, 40%, 60%, et 80% d'état de charge initiale. Les points 41, 42, 43, 44, 45 représentent les situations optimales.

Ainsi, le procédé de charge d'un accumulateur électrochimique comprend une étape E10 de détermination de l'état de charge $SOC_0$ de l'accumulateur, ou une valeur équivalente comme un état d'énergie $SOE_0$. Il comprend ainsi généralement une étape E10 de détermination de l'état initial de l'accumulateur électrochimique. La mise en oeuvre de cette étape permet par exemple de déterminer quelle courbe parmi les courbes 31 à 35 de la figure 4 est pertinente au vu de l'état de l'accumulateur qu'on souhaite charger.

Ensuite, il comprend une étape E11 de recherche du régime de charge optimal, qui maximise le produit des gains explicités ci-dessus. Sa mise en oeuvre possible consiste à choisir le point maximal 41 à 45 de la courbe identifiée 31 à 35 ci-dessus. Ce point permet de remonter à la valeur du courant $I_{ch}$ du régime de charge correspondant, grâce aux données de calibration. Ensuite, la charge en tant que telle est réalisée dans une étape E12, à partir de l'algorithme IU habituel, en utilisant la valeur de courant déterminée $I_{ch}$ pour la phase I de cette charge, la seconde phase U restant habituelle, jusqu'à la fin de la charge selon tout critère prédéfini.

Naturellement, l'identification du produit maximal entre les deux gains considérés peut se faire en variante par tout autre moyen de calcul mathématique que l'utilisation des courbes de la figure 4.

De plus, ce principe est applicable pour tout algorithme de charge prédéfini, comme les algorithmes à courant constant généralement utilisés pour les accumulateurs de type NiMH, ou les algorithmes de type IUi. Il est aussi applicable à tout autre algorithme. Le concept de l'invention est ainsi adapté à tout accumulateur électrochimique, quelle que soit sa technologie électrochimique utilisée, comme au lithium, au nickel, ou au plomb.

L'invention porte aussi sur un dispositif de charge d'un tel accumulateur électrochimique, qui met en oeuvre le procédé de charge décrit ci-dessus.

Elle porte aussi sur un système comprenant un dispositif alimenté par un accumulateur électrochimique et un dispositif de charge de cet accumulateur, qui mettent en oeuvre le procédé de charge décrit ci-dessus. Pour cela, le système peut utiliser des moyens logiciels et/ou matériels (software et/ou hardware), comprenant par exemple une mémoire intégrant les données de calibration définies par la phase de calibration décrite précédemment, et un calculateur pour connaître précisément l'état de l'accumulateur, en tant réel ou non, et pour mettre en oeuvre les calculs précédents.

## Revendications

1. Procédé de détermination des conditions de charge d'un accumulateur électrochimique, **caractérisé en ce qu'**il comprend les étapes suivantes :

   - réaliser une phase de calibration de l'accumulateur électrochimique, permettant de connaître son temps de charge en fonction de différents régimes de charge pour différentes valeurs d'état initiale de l'accumulateur électrochimique :
   - définir deux grandeurs appelées gain en temps et gain en énergie et représentant respectivement une sensibilité au temps de charge d'un accumulateur et une sensibilité au rendement énergétique ; et
   - calculer (E11), pour un état initial de l'accumulateur électrochimique, un régime de charge de l'accumulateur électrochimique qui maximise le produit du gain en temps et du gain en énergie définis préalablement.

2. Procédé de détermination des conditions de charge d'un accumulateur électrochimique selon la revendication précédente, **caractérisé en ce que** la phase de calibration de l'accumulateur électrochimique comprend la réalisation de n x m phases de charges pour n régimes de charge différents et m états de charge initiaux de l'accumulateur électrochimique.

3. Procédé de détermination des conditions de charge d'un accumulateur électrochimique selon la revendication précédente, **caractérisé en ce que** n est compris entre 5 et 10 inclus et/ou m est compris entre 4 et 8 inclus.

4. Procédé de détermination des conditions de charge d'un accumulateur électrochimique selon la revendication 2 ou 3, **caractérisé en ce que** la première phase de calibration de l'accumulateur électrochimique comprend l'itération des étapes E1 à E4 suivantes pour chacune des n régimes de charge ($I_{chi}$), soit pour i variant de 1 à n, et des m états de charge initiaux ($SOC_{0j}$), soit pour j variant de 1 à m :

   E1: chargement à pleine charge de l'accumulateur dans les conditions nominales;
   E2 : décharge de l'accumulateur dans des conditions nominales, jusqu'à un état de charge de l'accumulateur électrochimique à la valeur $SOC_{0j}$ recherchée :
   E3 : pleine charge de l'accumulateur à un régime de charge ($I_{chi}$)
   E4: décharge complète de l'accumulateur dans des conditions nominales.

5. Procédé de détermination des conditions de charge d'un accumulateur électrochimique selon la revendication précédente, **caractérisé en ce que** l'étape de pleine charge (E3) de l'accumulateur à un régime de charge ($I_{chi}$) comprend les sous-étapes suivantes :

E33 : mesure et mémorisation du temps total de charge ($t_{chij}$) obtenu ;
E34 : mesure et mémorisation de la quantité, totale ($A_{chij}$) d'ampères-heure injectés pour cette charge et/ou de l'énergie ($W_{hij}$) injectée dans l'accumulateur.

6. Procédé de détermination des conditions de charge d'un accumulateur électrochimique, l'une des revendications précédentes, **caractérisé en ce que** la phase de calibration de l'accumulateur électrochimique comprend aussi une itération de plusieurs phases de charge pour des températures différentes.

7. Procédé de charge d'un accumulateur électrochimique comprenant les étapes suivantes :

- déterminer (E10) l'état initial de l'accumulateur électrochimique;
- rechercher un régime dé charge optimum déterminé par le procédé selon l'une des revendications précédentes pour un état initial de l'accumulateur correspondant à celui déterminé préalablement ; et
- charger l'accumulateur électrochimique avec le régime de charge défini à l'étape précédente.

8. Procédé de charge d'un accumulateur électrochimique selon la revendication précédente, **caractérisé en ce que** l'étape (E10) de détermination de l'état initial de l'accumulateur électrochimique comprend le calcul de son état de charge initial ($SOC_0$) ou de son état d'énergie initial ($SOE_0$).

9. Procédé de charge d'un accumulateur électrochimique selon l'une des revendications 7 ou 8, **caractérisé en ce que** l'étape (E11) de détermination du régime de charge de l'accumulateur électrochimique comprend la maximisation du produit $G_t(I_{ch}) \times G_{wh}(I_{ch})$ où $G_t(I_{ch})$ est le gain en temps de charge, qui se calcule comme le rapport entre le temps de charge gagné pour un régime de charge considéré ($I_{ch}$) par rapport à un temps de charge lent de référence, sur le temps de charge de ce régime lent, et où $G_{wh}(I_{ch})$ est le gain énergétique, qui se définit comme le rapport entre la diminution d'énergie injectée dans l'accumulateur au régime de charge considéré ($I_{ch}$) par rapport à l'énergie injectée à un régime lent de référence, sur l'énergie injectée dans l'accumulateur au régime lent.

10. Procédé dé charge d'un accumulateur électrochimique selon l'une des revendications 7 à 9, **caractérisé en ce qu'**il comprend une étape (E12) de charge de l'accumulateur électrochimique comprenant une période de charge à courant constant (Ich) dont la valeur est déterminée pour maximiser le produit d'un gain en temps de charge par un gain en énergie.

11. Procédé de charge d'un accumulateur électrochimique selon la revendication précédente, **caractérisé en ce que** l'étape de charge (E12) comprend une période de charge à courant constant jusqu'à une valeur seuil de la tension puis une période de charge à tension constante à cette valeur seuil.

12. Dispositif de charge d'un accumulateur électrochimique, **caractérisé en ce qu'**il comprend des moyens de calibration pour réaliser une phase de calibration de l'accumulateur électrochimique, permettant de connaître son temps de charge en fonction de différents régimes de charge pour différentes valeurs d'état initial de l'accumulateur électrochimique et des moyens de calcul pour calculer, pour un état initial de l'accumulateur électrochimique, un régime de charge de l'accumulateur électrochimique qui maximise le produit d'un gain en temps et d'un gain en énergie représentant respectivement une sensibilité au temps de charge d'un accumulateur et une sensibilité au rendement énergétique.

13. Système comprenant un dispositif alimenté par un accumulateur électrochimique, **caractérisé en ce qu'**il comprend un dispositif de charge de cet accumulateur selon la revendication précédente.

## Patentansprüche

1. Verfahren zur Bestimmung der Ladebedingungen eines elektrochemischen Speichers, **dadurch gekennzeichnet, dass** es die folgenden Schritte aufweist:

- Durchführen einer Phase der Kalibrierung des elektrochemischen Speichers, die es ermöglicht, seine Ladezeit in Abhängigkeit von verschiedenen Ladebetriebsarten für verschiedene Werte eines Anfangszustands des elektrochemischen Speichers zu ermitteln;
- Definieren von zwei Größen, die "Zeitgewinn" und "Energiegewinn" genannt werden und eine Empfindlichkeit gegenüber der Ladezeit eines Speichers bzw. eine Empfindlichkeit gegenüber der Energieeffizienz darstellen; und
- Berechnen (E11), für einen Anfangszustand des elektrochemischen Speichers, einer Ladebetriebsart des elektrochemischen Speichers, für die das Produkt des Zeitgewinns und des Energiegewinns, die zuvor definiert wurden, maximal ist.

2. Verfahren zur Bestimmung der Ladebedingungen eines elektrochemischen Speichers nach dem vorhergehenden Anspruch, **dadurch gekennzeichnet, dass** die Phase der Kalibrierung des elektrochemischen Speichers die Durchführung von n x m Ladephasen für n verschiedene Ladebetriebsarten und m Anfangsladezustände des elektrochemischen Speichers beinhaltet.

3. Verfahren zur Bestimmung der Ladebedingungen eines elektrochemischen Speichers nach dem vorhergehenden Anspruch, **dadurch gekennzeichnet, dass** n mindestens 5 und höchstens 10 beträgt und/oder m mindestens 4 und höchstens 8 beträgt.

4. Verfahren zur Bestimmung der Ladebedingungen eines elektrochemischen Speichers nach Anspruch 2 oder 3, **dadurch gekennzeichnet, dass** die erste Phase der Kalibrierung des elektrochemischen Speichers die Iteration der folgenden Schritte E1 bis E4 für jede der n Ladebetriebsarten ($I_{chi}$), also für i von 1 bis n, und der m Anfangsladezustände ($SOC_{0j}$), also für j von 1 bis m, beinhaltet:

E1: Aufladung des Speichers bis zur vollen Ladung unter den Nennbedingungen;
E2: Entladung des Speichers unter Nennbedingungen bis zu einem Ladezustand des elektrochemischen Speichers bei dem angestrebten Wert $SOC_{0j}$;
E3: volle Aufladung des Speichers bei einer Ladebetriebsart ($I_{chi}$);
E4: vollständige Entladung des Speichers unter Nennbedingungen.

5. Verfahren zur Bestimmung der Ladebedingungen eines elektrochemischen Speichers nach dem vorhergehenden Anspruch, **dadurch gekennzeichnet, dass** der Schritt der vollen Aufladung (E3) des Speichers bei einer Ladebetriebsart ($I_{chi}$) die folgenden Teilschritte aufweist:

E33: Messung und Speicherung der erhaltenen Gesamtladezeit ($t_{chij}$) ;
E34: Messung und Speicherung der Gesamtmenge ($A_{chij}$) der Amperestunden, die für diese Aufladung eingespeist wurden, und/oder der Energie ($W_{hij}$), die in den Speicher eingespeist wurde.

6. Verfahren zur Bestimmung der Ladebedingungen eines elektrochemischen Speichers nach einem der vorhergehenden Ansprüche, **dadurch gekennzeichnet, dass** die Phase der Kalibrierung des elektrochemischen Speichers auch eine Iteration von mehreren Ladephasen für verschiedene Temperaturen beinhaltet.

7. Verfahren zum Aufladen eines elektrochemischen Speichers, welches die folgenden Schritte aufweist:

- Bestimmen (E10) des Anfangszustands des elektrochemischen Speichers;
- Auffinden einer optimalen Ladebetriebsart, die durch das Verfahren nach einem der vorhergehenden Ansprüche bestimmt wird, für einen Anfangszustand des Speichers, der dem zuvor bestimmten entspricht; und
- Aufladen des elektrochemischen Speichers mit der Ladebetriebsart, die im vorhergehenden Schritt definiert wurde.

8. Verfahren zum Aufladen eines elektrochemischen Speichers nach dem vorhergehenden Anspruch, **dadurch gekennzeichnet, dass** der Schritt (E10) der Bestimmung des Anfangszustands des elektrochemischen Speichers die Berechnung seines Anfangsladezustands ($SOC_0$) oder seines Anfangsenergiezustands ($SOE_0$) beinhaltet.

9. Verfahren zum Aufladen eines elektrochemischen Speichers nach einem der Ansprüche 7 oder 8, **dadurch gekennzeichnet, dass** der Schritt (E11) der Bestimmung der Ladebetriebsart des elektrochemischen Speichers die Maximierung des Produkts $G_t(I_{ch})$ x $G_{wh}(I_{ch})$ beinhaltet, wobei
$G_t(I_{ch})$ der Ladezeitgewinn ist, welcher als das Verhältnis zwischen der Ladezeit, die für eine betrachtete Ladebetriebsart ($I_{ch}$) in Bezug auf eine langsame Referenzladezeit gewonnen wird, und der Ladezeit dieser langsamen Ladebetriebsart berechnet wird, und wobei

$G_{wh}(I_{ch})$ der Energiegewinn ist, welcher als das Verhältnis zwischen der Verringerung der in den Speicher eingespeisten Energie bei der betrachteten Ladebetriebsart ($I_{ch}$) in Bezug auf die eingespeiste Energie bei einer langsamen Referenzbetriebsart und der bei der langsamen Betriebsart in den Speicher eingespeisten Energie definiert ist.

10. Verfahren zum Aufladen eines elektrochemischen Speichers nach einem der Ansprüche 7 bis 9, **dadurch gekennzeichnet, dass** es einen Schritt (E12) des Aufladens des elektrochemischen Speichers aufweist, der einen Zeitabschnitt des Aufladens mit einem konstanten Strom (Ich) beinhaltet, dessen Wert so bestimmt wird, dass das Produkt eines Ladezeitgewinns und eines Energiegewinns maximiert wird.

11. Verfahren zum Aufladen eines elektrochemischen Speichers nach dem vorhergehenden Anspruch, **dadurch gekennzeichnet, dass** der Schritt des Aufladens (E12) einen Zeitabschnitt des Aufladens mit konstantem Strom bis zu einem Schwellenwert der Spannung und danach einen Zeitabschnitt des Aufladens bei konstanter Spannung bei diesem Schwellenwert aufweist.

12. Vorrichtung zum Aufladen eines elektrochemischen Speichers, **dadurch gekennzeichnet, dass** sie aufweist: Kalibrierungsmittel zur Durchführung einer Phase der Kalibrierung des elektrochemischen Speichers, die es ermöglicht, seine Ladezeit in Abhängigkeit von verschiedenen Ladebetriebsarten für verschiedene Werte eines Anfangszustands des elektrochemischen Speichers zu ermitteln, und Berechnungsmittel zum Berechnen, für einen Anfangszustand des elektrochemischen Speichers, einer Ladebetriebsart des elektrochemischen Speichers, für die das Produkt eines Zeitgewinns und eines Energiegewinns, die eine Empfindlichkeit gegenüber der Ladezeit eines Speichers bzw. eine Empfindlichkeit gegenüber der Energieeffizienz darstellen, maximal ist.

13. System, welches eine von einem elektrochemischen Speicher gespeiste Vorrichtung aufweist, **dadurch gekennzeichnet, dass** es eine Vorrichtung zum Aufladen dieses Speichers nach dem vorhergehenden Anspruch aufweist.

**Claims**

1. Method for determining the charging conditions of an electrochemical accumulator, **characterized in that** it comprises the following steps:

   - carrying out a phase of calibrating the electrochemical accumulator, making it possible to know its charging time as a function of different charging regimes for different electrochemical accumulator initial state values;
   - defining two quantities called time saving and energy saving and respectively representing a sensitivity to the charging time of an accumulator and a sensitivity to the energy efficiency; and
   - calculating (E11), for an initial state of the electrochemical accumulator, a charging regime for the electrochemical accumulator which maximizes the product of the time saving and of the energy saving defined previously.

2. Method for determining the charging conditions of an electrochemical accumulator according to the preceding claim, **characterized in that** the electrochemical accumulator calibration phase comprises carrying out n x m charging phases for n different charging regimes and m initial states of charge of the electrochemical accumulator.

3. Method for determining the charging conditions of an electrochemical accumulator according to the preceding claim, **characterized in that** n is between 5 and 10 inclusive and/or m is between 4 and 8 inclusive.

4. Method for determining the charging conditions of an electrochemical accumulator according to Claim 2 or 3, **characterized in that** the first electrochemical accumulator calibration phase comprises the iteration of the following steps E1 to E4 for each of the n charging regimes ($I_{chi}$), or for i varying from 1 to n, and of the m initial states of charge ($SOC_{0j}$), or for j varying from 1 to m:

   E1: charging the accumulator to full charge in nominal conditions;
   E2: discharging the accumulator in nominal conditions, to a state of charge of the electrochemical accumulator at the $SOC_{0j}$ value sought;
   E3: fully charging the accumulator at a charging regime ($I_{chi}$);
   E4: completely discharging the accumulator in nominal conditions.

5. Method for determining the charging conditions of an electrochemical accumulator according to the preceding claim, **characterized in that** the step of fully charging (E3) the accumulator at a charging regime ($I_{chi}$) comprises the following substeps:

> E33: measuring and storing the total charging time ($t_{chij}$) obtained;
> E34: measuring and storing the total quantity ($A_{chij}$) of ampere-hours injected for this charge and/or of the energy ($W_{hij}$) injected into the accumulator.

6. Method for determining the charging conditions of an electrochemical accumulator according to one of the preceding claims, **characterized in that** the electrochemical accumulator calibration phase also comprises an iteration of a number of charging phases for different temperatures.

7. Method for charging an electrochemical accumulator comprising the following steps:

> - determining (E10) the initial state of the electrochemical accumulator;
> - searching for an optimum charging regime determined by the method according to one of the preceding claims for an initial state of the accumulator corresponding to that determined previously; and
> - charging the electrochemical accumulator with the charging regime defined in the preceding step.

8. Method for charging an electrochemical accumulator according to the preceding claim, **characterized in that** the step (E10) of determining the initial state of the electrochemical accumulator comprises the calculation of its initial state of charge ($SOC_0$) or of its initial state of energy ($SOE_0$).

9. Method for charging an electrochemical accumulator according to one of Claims 7 or 8, **characterized in that** the step (E11) of determining the charging regime of the electrochemical accumulator comprises maximizing the product $G_t(I_{ch}) \times G_{wh}(I_{ch})$ where
$G_t(I_{ch})$ is the charging time saving, which is calculated as the ratio between the charging time saved for a considered charging regime ($I_{ch}$) relative to a reference slow charging time, to the charging time of this slow regime, and where $G_{wh}(I_{ch})$ is the energy saving, which is defined as the ratio between the reduction of energy injected into the accumulator at the considered charging regime ($I_{ch}$) relative to the energy injected at a reference slow regime, to the energy injected into the accumulator at the slow regime.

10. Method for charging an electrochemical accumulator according to one of Claims 7 to 9, **characterized in that** it comprises a step (E12) of charging the electrochemical accumulator comprising a charging period with constant current (Ich) whose value is determined to maximize the product of a charging time saving and an energy saving.

11. Method for charging an electrochemical accumulator according to the preceding claim, **characterized in that** the charging step (E12) comprises a charging period with constant current up to a voltage threshold value, then a charging period with constant voltage at this threshold value.

12. Device for charging an electrochemical accumulator, **characterized in that** it comprises calibration means for carrying out a phase of calibrating the electrochemical accumulator, making it possible to know its charging time as a function of different charging regimes for different initial state values of the electrochemical accumulator and calculation means for calculating, for an initial state of the electrochemical accumulator, a charging regime of the electrochemical accumulator which maximizes the product of a time saving and an energy saving respectively representing a sensitivity to the charging time of an accumulator and a sensitivity to the energy efficiency.

13. System comprising a device powered by an electrochemical accumulator, **characterized in that** it comprises a device for charging this accumulator according to the preceding claim.

FIG.1

$$t_{ch}(I_{ch}, SOC_0) = t_{i\infty}(SOC_0) + \frac{Ah_{max}(SOC_0)}{I_{ch} + i_{min}(SOC_0)}$$

FIG.2

FIG.3

FIG.4

**E1** Chargement à pleine charge nominale

pause

**E2** Décharge, nominale partielle

pause

**E3** Charge à régime Ichi

pause

**E4** Décharge, nominale

Ichi, $SOC_{oj}$

Phase de calibration

**E10** État initial

**E11** Calcul du régime de charge optimal

**E12** Charge

Phase de charge

FIG.5

**EP 2 697 859 B1**

## RÉFÉRENCES CITÉES DANS LA DESCRIPTION

**Documents brevets cités dans la description**

- US 7528574 B